# EUROPEAN PATENT APPLICATION

(11) **EP 3 561 749 A1**
(43) Date of publication of application: **30.10.2019**
(21) Application number: 19168751.6
(22) Date of filing: 11.04.2019
(51) Int. Cl.: G06Q 10/08, G06Q 10/04

(54) **INVENTORY MANAGEMENT APPARATUS, INVENTORY MANAGEMENT METHOD, AND STORAGE MEDIUM**

(30) Priority: 26.04.2018 JP 2018085182
(71) Applicant: Hitachi Transport System, Ltd., Tokyo 104-8350 (JP)
(72) Inventor: OJIRO, Daichi, Chiyoda-ku, Tokyo 100-8280 (JP); HIRAYAMA, Junichi, Chiyoda-ku, Tokyo 100-8280 (JP); YONEKAWA, Akira, Chiyoda-ku, Tokyo 100-8280 (JP); ARA, Koji, Chuo-ku, Tokyo 104-8350 (JP); SHIMAZU, Yoshihito, Chuo-ku, Tokyo 104-8350 (JP); HORITA, Tetsuhiro, Chuo-ku, Tokyo 104-8350 (JP)
(74) Representative: Mewburn Ellis LLP

(57) **Abstract**

An inventory management apparatus including a processor and a memory. The processor stores shipping record data that stores the actual results of the shipment amount of the article, possible variation factor data in which variation factors affecting the shipment amount are set in advance, and a user forecasting model from the selected variation factor and shipment record data. The processor selects a variation factor from the possible variation factor data and generates a recommended forecasting model from the user forecasting model and the shipment result data. The processor calculates the forecasted value of the shipping amount of the articles from the user forecasting model as the first forecasted value and calculates the forecasted value of the shipping amount of the articles from the recommended forecasting model as the second forecasted value, and calculates the degree of effect on the first and second forecasted shipping amount for each variation factors.

## Description

### CLAIM OF PRIORITY

The present application claims priority from Japanese patent application JP 2018-085182 filed on April 26, 2018, the content of which is hereby incorporated by reference into this application.

### BACKGROUND

This invention relates to an inventory management apparatus, an inventory management method, and a program for a facility such as a distribution warehouse.

Operation of a distribution warehouse requires estimation of shipping amount. Inventory planning involves works for future shipment, such as storing an article expected to be shipped frequently or in a large amount to a location to easily pick up or transferring such an article to a main warehouse having shipping functions if the article is stored in another long-term storage warehouse that does not have shipping functions.

The shipping amount of each article is complexly affected by diverse variation factors. Accordingly, in shipment forecasting, the factors to be considered or the forecasting method to be employed are different depending on the article, so is the forecasting accuracy (the closeness of the actual record to the forecast). Inventory planning requires consideration of various characteristics unique to each article.

As a technique to forecast the demand for an article, JP 2013-131259 A is known. JP 2013-131259 A discloses a technique to achieve highly accurate forecasting by combining various forecasting models such as a moving average (MA) model and an auto-regressive integrated moving average (ARIMA) model.

### SUMMARY

According to JP 2013-131259 A, each forecasting model forecasts the demand from time-series patterns without resolving them into variation factors. Further, these models are blended to generate a forecasting model and therefore, it is difficult for a warehouse administrator to easily understand the relation between each variation factor that affects the shipment and the provided forecast. The administrator (or the user) is not persuaded unless he or she understands the grounds of the forecast, and accordingly, there has been a problem that the administrator finds difficulty in utilizing the forecast.

Furthermore, for inventory planning based on such forecasts, it is necessary to consider the forecasting accuracies that are different article by article in calculating an inventory plan.

This invention is accomplished in view of the above-described problems and aims to present a forecast considering variation factors understandable or persuasive for a warehouse administrator and further, to provide an inventory plan based on the forecast.

For solving the above problem, an embodiment of this invention includes an inventory management apparatus configured to manage an inventory of articles stored in a warehouse, the inventory management apparatus comprising: a processor; a memory; shipping record data storing records of shipping amounts of the articles shipped from the warehouse; possible variation factor data in which variation factors supposed to affect the shipping amounts are specified in advance; a user forecasting model generator configured to receive variation factors selected by a user and generate a user forecasting model from the received variation factors and the shipping record data; and a recommended forecasting model generator configured to select variation factors from the possible variation factor data and generate a recommended forecasting model from the user forecasting model and the shipping record data, wherein the recommended forecasting model generator is configured to: calculate a forecasted shipping amount of an article as a first forecasted shipping amount using the user forecasting model; calculate a forecasted shipping amount of the article as a second forecasted shipping amount using the recommended forecasting model; and calculate a degree of effect of each variation factor on the first forecasted shipping amount and the second forecasted shipping amount from values obtained by resolving a difference between the first forecasted shipping amount and the second forecasted shipping amount into the variation factors.

An aspect of this invention enables presenting a forecast considering variation factors understandable or persuasive for a warehouse administrator and further, providing an inventory plan based on the forecast.

### BRIEF DESCRIPTION OF THE DRAWINGS

FIG. 1A is a block diagram for illustrating an example of an inventory management system according to a first embodiment of this invention.
FIG. 1B is a block diagram for illustrating an example of the inventory management system according to the first embodiment of this invention.
FIG. 2 is a diagram for providing an example of the business day table included in the possible variation factor data according to the first embodiment of this invention.
FIG. 3 is a diagram for providing an example of the weather table included in the possible variation factor data according to the first embodiment of this invention.
FIG. 4 is a diagram for providing an example of the variation factor configuration table in the possible variation factor data according to the first embodiment of this invention.
FIG. 5 is a diagram for providing an example of the shipping record data according to the first embodiment of this invention.
FIG. 6 is a flowchart of an example of the processing performed in the inventory management apparatus according to the first embodiment of this invention.
FIG. 7 is a diagram for providing an example of the user configuration screen according to the first embodiment of this invention.
FIG. 8 is a diagram for providing an example of the user forecast visualization screen according to the first embodiment of this invention.
FIG. 9 is a detailed flowchart of an example of the processing performed by the recommended forecasting model generator according to the first embodiment of this invention.
FIG. 10 is a diagram for providing an example of an inventory planning configuration screen according to the first embodiment of this invention.
FIG. 11 is a flowchart of an example of the processing of the transportation amount calculation module to calculate a transportation amount of each article according to the first embodiment of this invention.
FIG. 12 is a diagram for providing an example of the screen to output a proposed inventory plan according to the first embodiment of this invention.
FIG. 13 is a diagram for providing an example of the screen to display the details of the inventory plan according to the first embodiment of this invention.
FIG. 14 is a diagram for providing an example of the screen to display the effect rates on forecasting according to the first embodiment of this
FIG. 15 is a flowchart of an example of the processing performed in the computer according to a second embodiment of this invention.
FIG. 16 is a diagram for providing an example of a shipping amount adjustment configuration screen according to the second embodiment of this invention.
FIG. 17 is a diagram for providing an example of a graph in which the shipping amount is adjusted according to the second embodiment of this invention.
FIG. 18 is a flowchart of an example of the processing performed in the computer according to a third embodiment of this invention.
FIG. 19 is a diagram for providing an example of the user forecasting model selection screen according to the third embodiment of this invention.
FIG. 20 is a diagram for providing an example of the inventory data according to the first embodiment of this invention.
FIG. 21 is a diagram for providing an example of the location table according to the first embodiment of this invention.

### DETAILED DESCRIPTION OF THE EMBODIMENTS

Hereinafter, embodiments of this invention will be described based on the accompanying drawings.

### EMBODIMENT 1

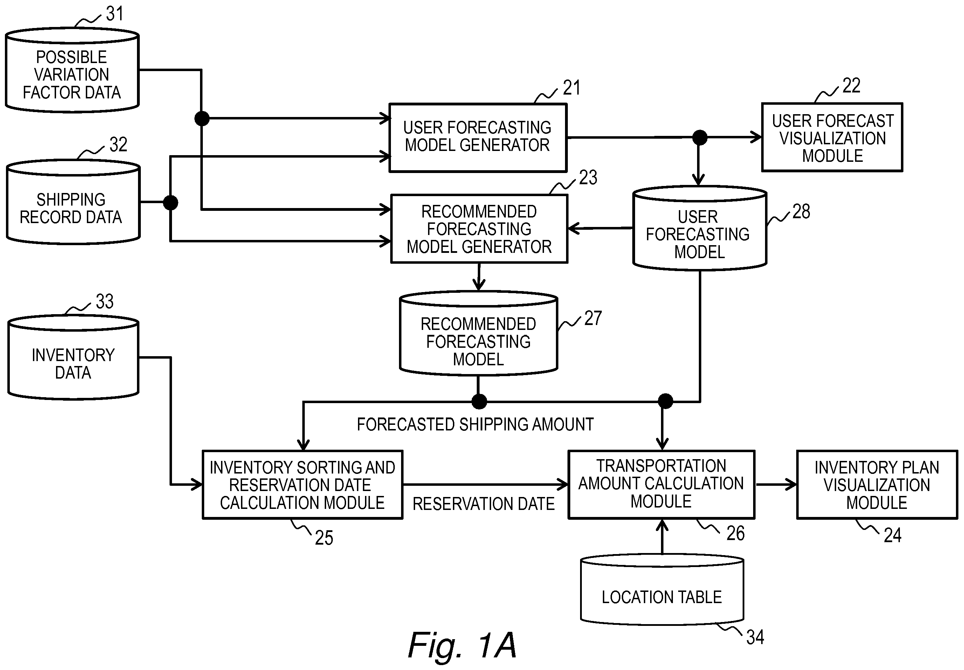

Embodiment 1 describes an inventory management system that forecasts the shipping amount of each article and generates a plan (inventory plan) to transport the article in stock from a warehouse to another based on the forecasted shipping amount. The transportation plan described in Embodiment 1 is applicable to transporting an article expected to be shipped in a near future from a storage warehouse to a warehouse having shipping functions or transporting an article having little prospect to be shipped soon to a long-term storage warehouse. The transportation plan can be used as a transfer plan to transfer a stock from floor to floor in the same warehouse or from area to area on the same floor sectioned into a plurality of areas. FIG. 1A is a block diagram for illustrating an example of an inventory management system in Embodiment 1 of this invention.

The inventory management system includes possible variation factor data 31 on variation factors that are supposed to affect the shipping amounts of articles; shipping record data 32 which is accumulated shipping amount records of articles, a user forecasting model generator 21 for generating a user forecasting model 28 from the possible variation factor data 31 and the shipping record data 32 under the conditions specified by the user (or the administrator) of the inventory management system; a user forecast visualization module 22 for visualizing the user forecasting model 28; a recommended forecasting model generator 23 for generating a recommended forecasting model 27 of the inventory management system from the possible variation factor data 31, the shipping record data 32, and the user forecasting model 28; an inventory sorting and reservation date calculation module 25 for calculating a reservation date from inventory data 33; a transportation amount calculation module 26 for calculating an inventory plan from the reservation date, the user forecasting model 28, and a warehouse location table 34; and an inventory plan visualization module 24 for displaying the calculated inventory plan.

Logistics and warehouse administrators have their own conventional prediction methods. For example, they predict the daily shipping amounts through adjustment by increasing or decreasing the average shipping amount in a certain period in the past in view of the tendency of each day of the week or by increasing the shipping amount in the end of the month, the beginning of the month, or before and after a holiday when the shipping amount tends to increase.

Such a conventional prediction does not sufficiently reflect variation factors of shipping amount and accordingly, the prediction accuracy (the closeness of the actual shipping amount to the prediction) is low. However, the prediction method based on the experiences of the warehouse administrator provides a prediction understandable or persuasive for the warehouse administrator.

Hence, the inventory management system in Embodiment 1 generates a forecasting model (recommended forecasting model 27) configured by incorporating forecasts based on individual variation factors to the predictive formula used by the administrator to present a final forecast in which the effects of variation factors are incorporated in the prediction of the warehouse administrator. This configuration enables the warehouse administrator to understand and agree with the various variation factors considered in creating the forecast. However, the forecast still has a possibility that the actual shipping amount of some article will significantly deviate from the forecasted shipping amount. Accordingly, the warehouse management system evaluates the accuracy of the forecasting model and generates an inventory plan considering the forecasted shipping amount and its assurance level.

The possible variation factor data 31 holds in advance data related to variation factors that affect the shipping amount in the past or the future. Embodiment 1 provides an example where the possible variation factor data 31 includes a business day table 311 related to the business day and a weather table 312 related to the weather. The shipping record data 32 stores data on the actual shipping amounts in the past. The inventory data 33 stores information on the articles in stock.

The inventory management system in Embodiment 1 first receives information on prediction by the administrator (user) through the user forecasting model generator 21 and generates a forecasting model (user forecasting model 28) occurring in the user from the possible variation factor data 31 and the shipping record data 32. The user forecast visualization module 22 presents a forecast by the user forecasting model 28.

The recommended forecasting model generator 23 generates a forecasting model (recommended forecasting model 27) recommended based on the user forecasting model 28, the shipping record data 32, and the possible variation factor data 31.

The inventory sorting and reservation date calculation module 25 determines reservation priorities and reservation dates of individual stocks for their shipment, using the data in the inventory data 33. The transportation amount calculation module 26 calculates the transportation amount of each article in stock based on the recommended forecasting model 27, the user's criteria for inventory planning, and information in the location table 34, considering the forecasting accuracy. The inventory plan visualization module 24 outputs an inventory plan including the transportation amount of each article using the calculation results of the transportation amount calculation module 26 and the inventory sorting and reservation date calculation module 25.

Each of the possible variation factor data 31, the shipping record data 32, and the inventory data 33 can be operated in the form of a database.

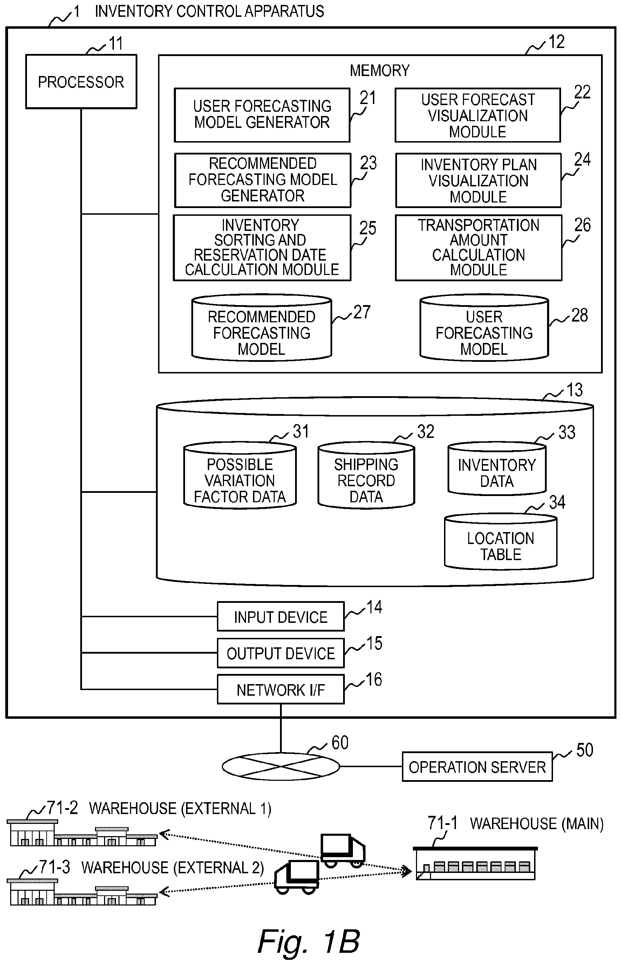

FIG. 1B is a block diagram for illustrating an example of the inventory management system in Embodiment 1 of this invention. The inventory management system is a computer system for managing the inventories of articles in a warehouse (main) 71-1 having shipping functions, and a warehouse (external 1) 71-2 and a warehouse (external 2) 71-3 having no shipping functions. In the following description, a warehouse that is not referred to as a specific one is provided with a reference sign 71.

The inventory management system includes an inventory management apparatus 1 and an operation server 50 connected with the inventory management apparatus 1 through a network 60. The operation server 50 is a computer for collecting the amounts of the articles stored in the warehouses 71 to provide them to the inventory management apparatus 1.

The inventory management apparatus 1 is a computer including a processor 11, a memory 12, a storage device 13, an input device 14, an output device 15, and a network interface 16.

The network interface 16 is connected with the network 60 to communicate with the operation server 50. The input device 14 includes a mouse, a keyboard, and/or a touch panel. The output device 15 includes a display device, for example.

The memory 12 stores function modules of the user forecasting model generator 21, the user forecast visualization module 22, the recommended forecasting model generator 23, the inventory plan visualization module 24, the inventory sorting and reservation date calculation module 25, the transportation amount calculation module 26. They are loaded to the memory 12 as programs and executed by the processor 11. The memory 12 also stores a user forecasting model 28 generated by the user forecasting model generator 21 and a recommended forecasting model 27 generated by the recommended forecasting model generator 23.

The storage device 13 stores the possible variation factor data 31, the shipping record data 32, the inventory data 33, and the location table 34.

The processor 11 performs processing in accordance with the program of each function module to work as a function module for providing a predetermined function. For example, the processor 11 performs processing in accordance with the user forecasting model generation program to work as the user forecasting model generator 21. The same applies to the other programs. Furthermore, the processor 11 works as the function modules for providing the functions of a plurality of processes executed by each program. Each computer and the computer system are an apparatus and a system including these function modules.

The programs for implementing the functions of the inventory management apparatus 1 and information such as tables can be stored in the storage device 13, a storage device such as a non-volatile semiconductor memory, a hard disk drive, or a solid state drive (SSD), or a computer-readable non-transitory data storage medium such as an IC card, an SD card, or a DVD.

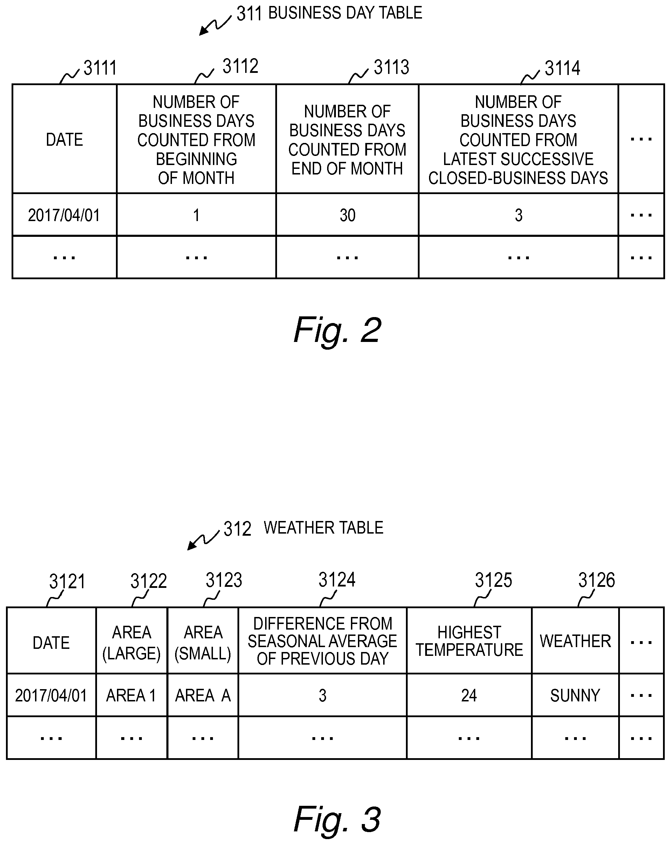

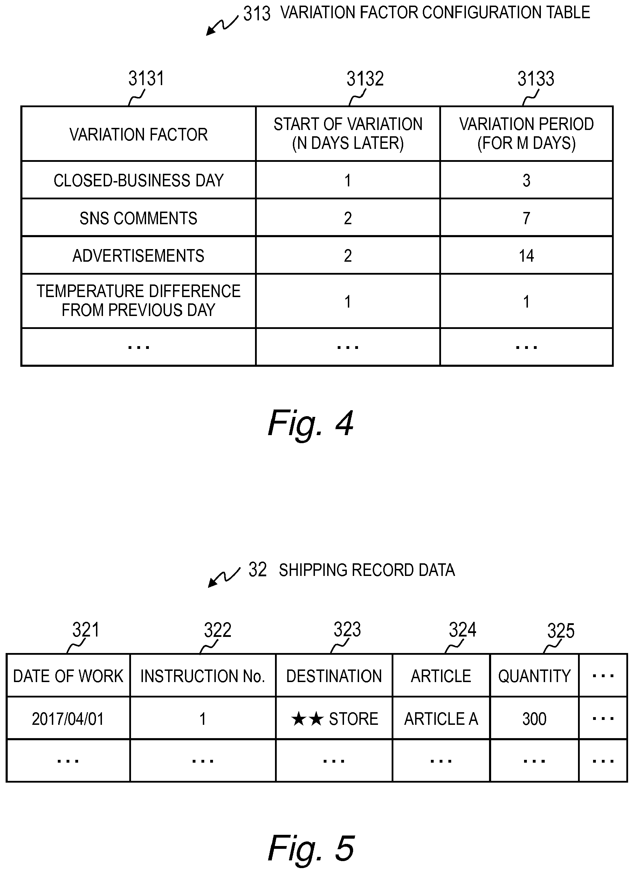

The possible variation factor data 31 stores data presumed to affect the variation in shipping amount of an article, such as a business day table 311 in which variation factors related to the business day are preset in advance, a weather table 312 in which variation factors related to the weather and the temperature are preset, and a variation factor configuration table 313. FIGS. 2 to 4 provide examples of the possible variation factor data 31. FIGS. 5, 20, and 21 provide examples of the shipping record data 32, the inventory data 33, and the location table 34, respectively.

FIG. 2 is a diagram for providing an example of the business day table 311 included in the possible variation factor data 31. The business day table 311 is an example of possible variation factor data 31 related to the business day of the warehouses and the shipping destinations (clients).

The business day table 311 includes a date 3111, a number of business days counted from the beginning of the month 3112, a number of business days counted from the end of the month 3113, and a number of business days counted from the latest successive closed-business days in an entry.

The shipping amount of an article varies depending on the business day of the warehouse and the clients. For example, when the warehouse is going to be closed, clients will place orders during several days before the closure to secure their necessary stock. Some client may manage their business from their own stock during the closed period and place an order of a larger amount after the warehouse is reopened. As noted from these examples, the shipping amount may increase in several days before and after the closure.

In addition to the foregoing examples, some client may check their inventory in the beginning or the end of a month and place a bunch of orders for articles expected to be needed. In view of the foregoing, data on each date indicating the numbers of business days counted from the beginning of the month, the end of the month, and the latest successive closed-business days is stored. The numbers in the business day table 311 are updated in a predetermined cycle (for example, one day).

FIG. 3 is a diagram for providing an example of the weather table 312 included in the possible variation factor data 31. The weather table 312 includes a date 3121, an area (large) 3122, an area (small) 3123, a difference from the seasonal average of the previous day 3124, a highest temperature 3125, and a weather 3126 in an entry.

The area (large) 3122 stores the name of a district, for example. The area (small) 3123 stores the name of a prefecture or a city, for example.

The weather includes numerical data such as a temperature and a humidity and category data such as sunny and cloudy. The weather is a variation factor of the shipping amount because the sales of some article could change depending on the temperature. The number of visitors to a store could also change depending on whether the weather is sunny or rainy and therefore, the weather affects the shipping amount of an article. Since the shipping amount could be affected by not only the temperature but also the temperature difference from the temperature in the same season of the average year or the temperature of the previous day, the weather table 312 can store such data together. Moreover, the weather is different depending on the area and accordingly, the weather table 312 can store the weather information of each date and each area.

In addition to the foregoing examples, the possible variation factor data 31 may include information about the market, social events (such as Christmas or New Year Holidays), sales records (such as the sales quantity of each article), social networking service (SNS) information (such as the number of everyday comments on each article), or advertisement (such as the number of print advertisements, web advertisements, or TV advertisements of each article).

The possible variation factor data 31 further includes information required to apply each variation factor to a forecasting model. FIG. 4 is an example of such information. FIG. 4 is a diagram for providing an example of the variation factor configuration table 313 in the possible variation factor data 31.

The variation factor configuration table 313 includes a variation factor 3131, a start of variation (N days later) 3132, a variation period (for M days) 3133 in an entry. The variation factor 3131 stores a cause to vary the shipping amount of an article. The start of variation (N days later) 3132 stores the number of days to be taken to show the actual effect on the shipping amount after the variation factor 3131 occurs. The variation period (for M days) stores the number of days for which the variation in shipping amount lasts. The variation factor configuration table 313 is configured in advance by the administrator.

For example, the information on operation of the warehouses and the clients could explain the variation (chiefly, increase) in shipping amount of the business days preceding and following a closed-business day. To apply this variation to a forecasting model, it is necessary to specify how many business days the shipping amount will vary before and after the closed-business day. For another example, the increase or decrease in shipping amount because of SNS information or advertisement information would be delayed for a while after the SNS message is posted or the advertisement is issued. Accordingly, to apply the SNS information to a forecasting model, it is necessary to specify how many days later the shipping amount will start varying or how many days the variation will last.

FIG. 5 is a diagram for providing an example of the shipping record data 32 in Embodiment 1 of this invention. The shipping record data 32 stores shipping amounts of articles in each warehouse 71. The shipping record data 32 includes a date of work 321, an instruction No. 322, a destination 323, an article 324, and a quantity 325 in one entry. The instruction No. 322 stores an instruction number for the shipment.

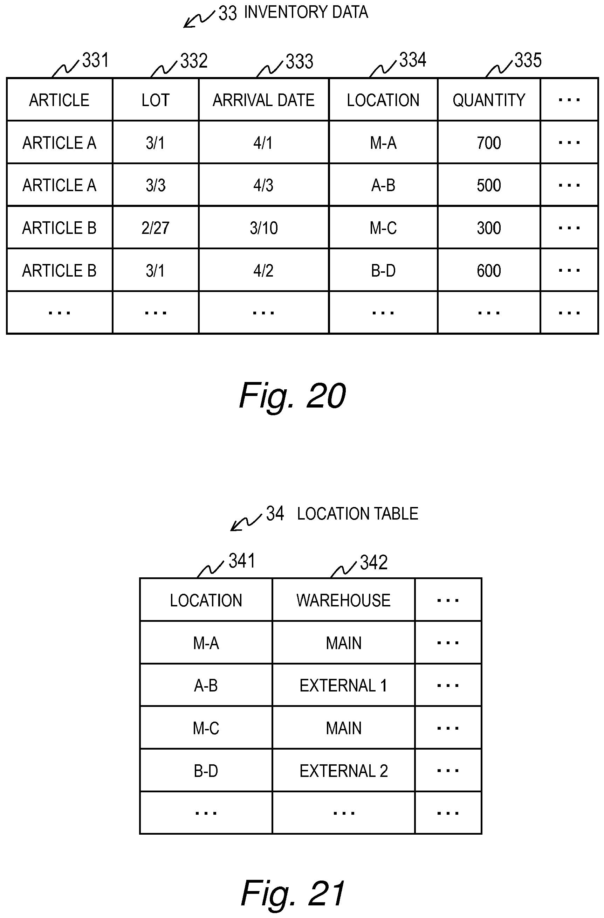

FIG. 20 is a diagram for providing an example of the inventory data 33 in Embodiment 1 of this invention. The inventory data 33 includes an article 331, a lot 332, an arrival date 333, a location 334, and a quantity 335 in one entry.

The article 331 stores the identifier or the name of an article. The lot 332 stores information on the production lot of the article. In the example of FIG. 20, the production date is stored. The arrival date 333 stores the date when the article arrives at a warehouse 71.

The location 334 stores the information identifying a warehouse 71 and an area in the warehouse 71. For example, in the case of "M-A", "M" represents the warehouse (main) 71-1 and "A" is the identifier of an area in the warehouse. The quantity 335 stores the total quantity of the article stored in the location 334.

The inventory data 33 is updated in a predetermined cycle (for example, one day). The inventory data 33 is updated based on the inventory information collected by the inventory management apparatus 1 from the operation server 50. The inventory data 33 may be configured to include a stock holding period for each article 331.

FIG. 21 is a diagram for providing an example of the location table 34 in Embodiment 1 of this invention. The location table 34 includes a location 341 and a warehouse 342 in one entry.

The location 341 stores information for identifying a warehouse 71 and an area in the warehouse 71. For example, in the case of "M-A", "M" represents the warehouse (main) 71-1 and "A" is the identifier of an area in the warehouse. The warehouse 342 stores the description of the warehouse corresponding to the location, Warehouse (Main) 71-1, Warehouse (External 1) 71-2, or Warehouse (External 2) 71-3.

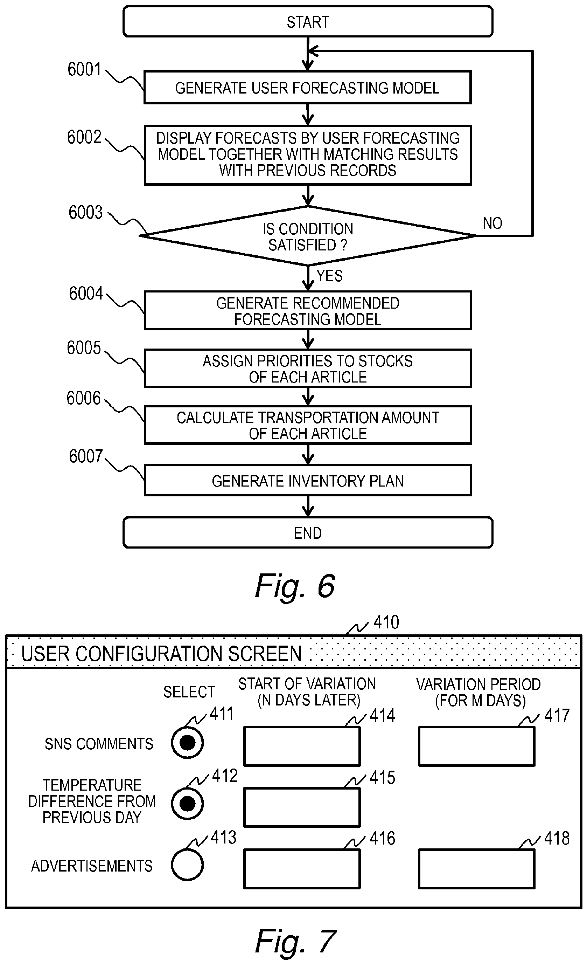

FIG. 6 is a flowchart of an example of the processing performed in the inventory management apparatus 1 in Embodiment 1. This processing is executed when the user of the inventory management apparatus 1 inputs a specific instruction through the input device 14.

Step 6001 is performed by the user forecasting model generator 21. The user forecasting model generator 21 outputs a user configuration screen 410 shown in FIG. 7 to the output device 15 to acquire configuration information to generate a user forecasting model.

FIG. 7 is a diagram for providing an example of the user configuration screen 410. The user configuration screen 410 shows "SNS comments", "Temperature difference from previous day", and "Advertisements" as examples of variation factors. The user of the inventory management apparatus 1 selects one or more factors by selecting corresponding radio buttons 411 to 413 with the input device 14 to enable input to "Start of variation (N days later)" 414 to 416 and "Variation period (for M days)" 417 and 418. As to the "Temperature difference from previous day", however, the variation period (for M days) is fixed to one day, no input is necessary. The user forecasting model generator 21 receives the user configuration information from the input device 14.

The configuration information on the variation factors can be received not only by input through a graphical user interface (GUI) but also import of an electronic file in a predetermined format. If the user does not specify anything, the user forecasting model generator 21 may register the average shipping amount in a predetermined period (for example, one month) in the past as a variation factor.

The user forecasting model generator 21 generates a user forecasting model 28 based on the acquired user configuration information and if necessary, information in the variation factor configuration table 313.

The user forecasting model generator 21 may conduct multiple regression analysis using the variation factors specified by the user as explanatory variables and the shipping record data 32 as a target variable to express the user forecasting model 28 as a multiple regression model. Alternatively, the user forecasting model generator 21 may generate the user forecasting model 28 as a non-linear model. The generated user forecasting model 28 is output from the user forecasting model generator 21.

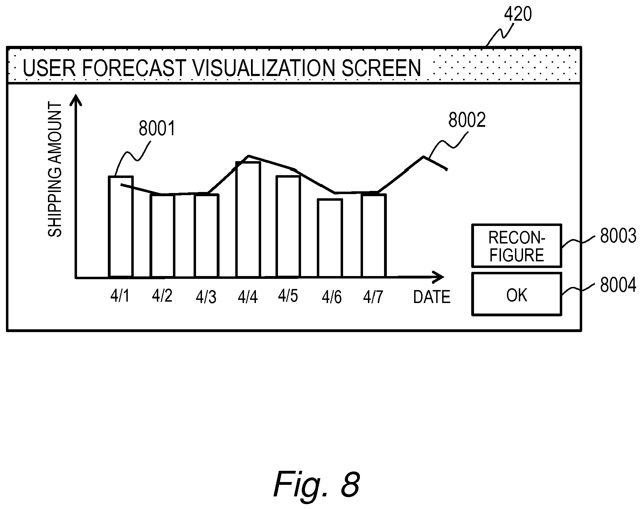

Step 6002 is performed by the user forecast visualization module 22. Using the user forecasting model 28 and the information on the actual shipping amounts in the shipping record data 32, the user forecast visualization module 22 outputs matching results of the forecasts from the past to the future by the user forecasting model 28 (8002 in FIG. 8) with the actual records in the past (8001 in FIG. 8) to the output device 15 as a user forecast visualization screen 420.

FIG. 8 is a diagram for providing an example of the user forecast visualization screen 420. The user forecast visualization screen 420 is a GUI for the user to check whether the forecast by the user forecasting model 28 or the time-series waveform of the user forecasting model 28 is the same as predicted by the user or whether the model is persuasive for the user.

The user forecast visualization screen 420 may be configured to show an evaluation value calculated through root mean square error (RMSE) analysis or mean absolute percentage error (MAPE) analysis. In case where the user is not satisfied, the user forecast visualization screen 420 may also be configured to be switched to the GUI in FIG. 7 generated by the user forecasting model generator 21 in response to a click of the button 8003, for example, to allow the user to reconfigure the variation factors.

At Step 6003, the user forecast visualization module 22 determines whether a predetermined condition is satisfied. The condition is assumed to be the user's approval by pressing the OK button 8004 in FIG. 8, but not limited to this example. For another example of the case where MAPE analysis is conducted, the user forecast visualization module 22 may determine whether the calculated analysis result satisfies a predetermined condition.

If the predetermined condition is satisfied, the user forecast visualization module 22 proceeds to Step 6004 and if not, returns to Step 6001 to repeat the foregoing processing.

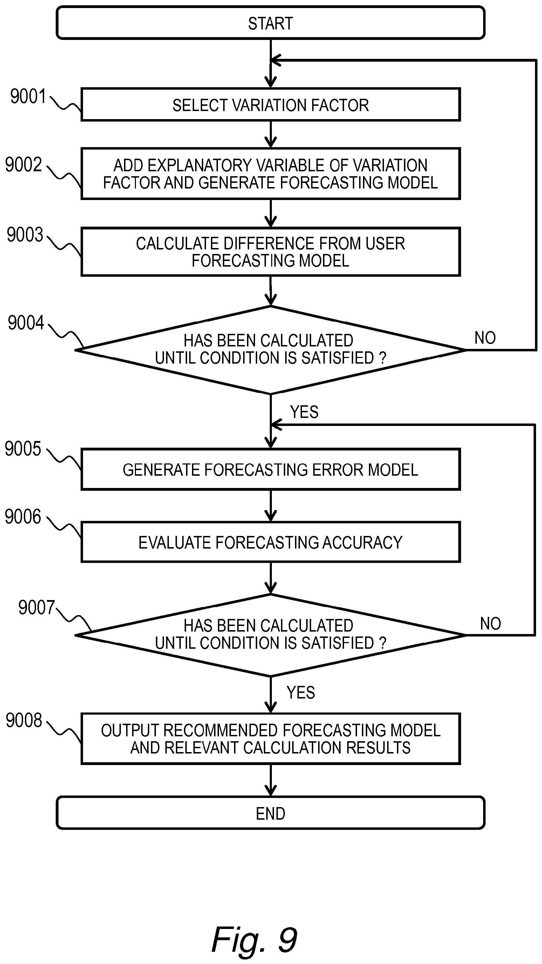

Step 6004 is performed by the recommended forecasting model generator 23. The recommended forecasting model generator 23 acquires the possible variation factor information which the user has not selected from the user forecasting model. The recommended forecasting model generator 23 acquires information related to the acquired possible variation factor information from the variation factor configuration table 313. Next, the recommended forecasting model generator 23 obtains the actual result information of the shipment amounts from the shipping record data 32. Then, the recommended forecasting model generator 23 generates a recommended forecasting model 27 from the information related to the possible variation factor information and the actual information of the shipment amounts. FIG. 9 is a detailed flowchart of an example of the processing performed by the recommended forecasting model generator 23.

At Step 9001, the recommended forecasting model generator 23 selects a variation factor. The recommended forecasting model generator 23 selects the variation factors that are not used to generate the user forecasting model 28 one by one.

Preferably, the recommended forecasting model generator 23 repeats the loop from Steps 9001 to 9004 to try forecasting models in all combinations of variation factors by successively changing the variation factor to be selected. For example, the recommended forecasting model generator 23 selects a new variation factor from all variation factors not selected in generating the user forecasting model 28 as a replacement for the previously selected variation factor in every loop.

At Step 9002, the recommended forecasting model generator 23 selects an explanatory variable based on the information on the selected variation factor in the variation factor configuration table 313. For example, in the case where the variation factor is SNS comments and configured such that the number of comments affects the shipping amount two days later, the recommended forecasting model generator 23 determines the number of SNS comments posted two days before to be one of the explanatory variables for the daily shipping amount to be forecasted.

The recommended forecasting model generator 23 adds this explanatory variable to the user forecasting model 28 to generate a forecasting model. For example, in the case of a multiple regression model, the recommended forecasting model generator 23 adds the explanatory variable to the user forecasting model 28, conducts multiple regression analysis, calculates partial regression coefficients for the explanatory variables, and creates a model (hereinafter, this model is referred to as forecasting model with an additional explanatory variable). In other words, the forecasting model with an additional explanatory variable is a model in which an explanatory variable unselected by the user for the user forecasting model 28 has been added.

At Step 9003, the recommended forecasting model generator 23 calculates the differences between the daily shipping amounts of each article calculated by the forecasting model with an additional explanatory variable and the daily shipping amounts of each article calculated by the user forecasting model 28. Hereinafter, the difference between a value forecasted by the forecasting model with an additional explanatory variable and a value forecasted by the user forecasting model 28 is referred to as a difference D from the user forecast value. The shipping amount forecasted by the forecasting model with an additional explanatory variable and the shipping amount forecasted by the user forecasting model 28 are calculated for each day and each article.

At Step 9004, the recommended forecasting model generator 23 determines whether the calculation has been repeated until a predetermined condition is satisfied. The condition can be, for example, all variation factors unselected by the user have been selected or all configuration conditions of each variation factor have been selected in the calculation. If calculation under all combinations is difficult because of the limited computer resources or calculation time, calculation can be performed with only a limited number of possible variation factors selected in advance.

If the predetermined condition is satisfied, the recommended forecasting model generator 23 proceeds to Step 9005 and if not, returns to Step 9001 to repeat the foregoing processing until the condition is satisfied.

At Step 9005, the recommended forecasting model generator 23 generates a forecasting error model using the differences D from the user forecast value based on individual variation factors calculated by the foregoing Step 9004 as explanatory variables and the forecasting error of the user forecasting model 28 as a target variable.

For example, the coefficients for the explanatory variables of the forecasting error model can be calculated by multiple regression analysis. The explanatory variables in this calculation can be all differences D from the user forecast values of the forecasting models with additional explanatory variable calculated by Step 9004 or some selected ones.

The forecasting error can be calculated from the difference between the shipping record data 32 and the forecast by the user forecasting model 28. In other words, the forecasting error is calculated from the values forecasted by the user forecasting model 28 about past records and the actual shipping amounts.

At Step 9006, the recommended forecasting model generator 23 evaluates the forecasting error model applied to an evaluation period. For example, the evaluation can be made by calculating the evaluation value of the forecasting error model by the aforementioned RMSE or MAPE, for example.

At Step 9007, the recommended forecasting model generator 23 determines whether the calculation has been repeated until a predetermined condition is satisfied. The condition can be, for example, the evaluation value of the forecasting error model is higher than a predetermined acceptable value or all combinations of explanatory variables have been used, for example.

If the predetermined condition is satisfied, the recommended forecasting model generator 23 proceeds to Step 9008 and if not, returns to Step 9005 to repeat the foregoing processing until the predetermined condition is satisfied.

At Step 9008, the recommended forecasting model generator 23 calculates the sum of the formulae of the forecasting error model (for example, Yerr) calculated by Step 9007 and the user forecasting model 28 (for example, Yuser) as a recommended forecasting model (Yerr + Yuser) 27.

The forecasting error model to be used is the one evaluated highest at Step 9006 (for example, the model that has acquired an RMSE or MAPE evaluation value smaller than a predetermined threshold).

In the recommended forecasting model 27, the value for one day in the term of an explanatory variable originating from the forecasting error model is a value explaining the difference between the shipping amount forecasted by the user forecasting model 28 and the shipping amount forecasted by the recommended forecasting model 27 after resolving it into variation factors. Hereinafter, this value is referred to as variation factor-specific shipping amount difference.

The recommended forecasting model generator 23 further determines the error range of the recommended forecasting model. For example, assuming that the forecasting error follows normal distribution, the error range can be a value range of the forecasted shipping amount increased and reduced by the amount corresponding to the standard deviation, or the value range from the value obtained by subtracting the amount corresponding to the standard deviation from the forecasted shipping amount (which should be not less than 0) to the value obtained by adding the amount corresponding to the standard deviation to the forecasted shipping amount. Although the following description employs this range for the error range, the error range is not limited to this example and can be determined differently by a known method.

At Step 9008, the recommended forecasting model generator 23 outputs the recommended forecasting model 27 generated as described above. The recommended forecasting model generator 23 also calculates and outputs data (such as the error range) relevant to the recommended forecasting model 27.

Through the above-described processing, the recommended forecasting model generator 23 generates a recommended forecasting model 27.

Returning to the processing in FIG. 6, Step 6005 is performed by the inventory sorting and reservation date calculation module 25. The inventory sorting and reservation date calculation module 25 assigns shipping priorities to stocks of each article. For example, in the case of first-in and first-out operation, higher priority is assigned to a stock that has arrived earlier.

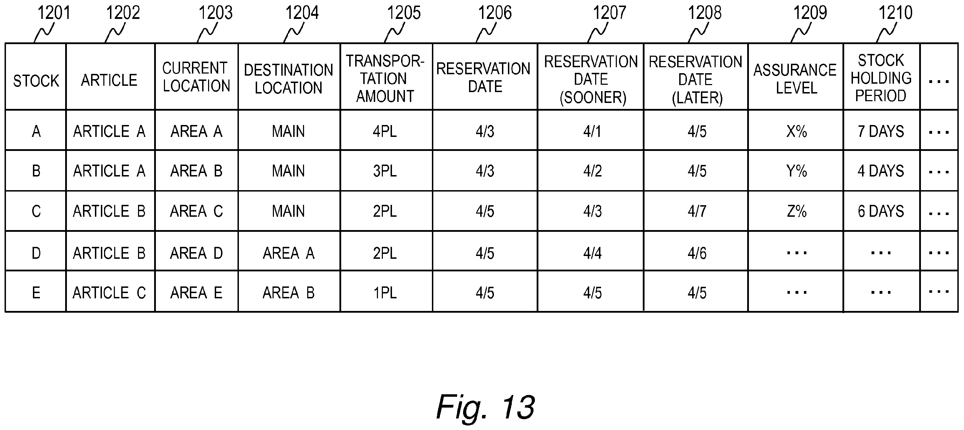

The inventory sorting and reservation date calculation module 25 calculates a reservation date for each stock in view of the priority information and the information on forecasted shipping amounts. Calculation of the reservation date for a stock is described. With respect to a given stock of an article, the calculation compares the total amount of the same article assigned higher priority than the stock with an accumulated forecasted shipping amount obtained by accumulating forecasted daily shipping amounts in time series to determine that the earliest date on which the accumulated forecasted shipping amount exceeds the total amount is the reservation date (1206 in later-described FIG. 13).

The inventory sorting and reservation date calculation module 25 further calculates a reservation date using the highest values in the error range (or the values obtained by adding the standard deviation to the forecasted shipping amounts) as the forecasted daily shipping amounts and determines that the calculated date is a reservation date (sooner) (1207 in later-described FIG. 13). Moreover, the inventory sorting and reservation date calculation module 25 calculates a reservation date using the lowest values in the error range (or the values obtained by subtracting the standard deviation from the forecasted shipping amounts) as the forecasted daily shipping amounts and determines that the calculated date is a reservation date (later) (1208 in later-described FIG. 13)

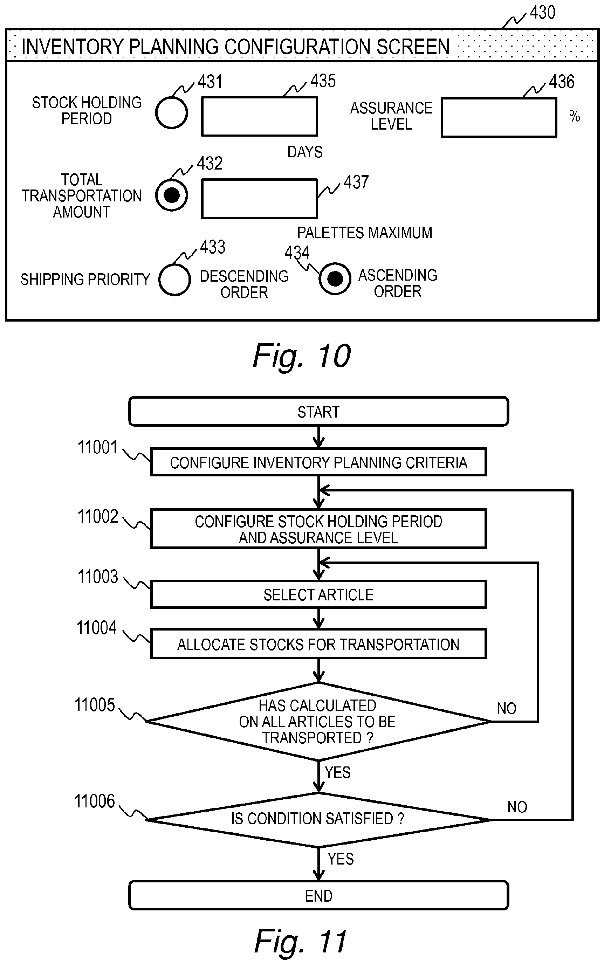

Step 6006 is performed by the transportation amount calculation module 26. FIG. 11 is a flowchart of an example of the processing of the transportation amount calculation module 26 to calculate a transportation amount of each article.

At Step 11001, the transportation amount calculation module 26 configures inventory planning criteria. The inventory planning criteria are specified by the user in accordance with the inventory planning policy. In the case where the next transportation is going to be a certain period later because of the schedule of transportation vehicles, sufficient amounts of articles should be transported so that transportation between warehouses 71 will not be required in the certain period.

In such a case, the user specifies a stock holding period (the number of days in which no stockout should occur) for a destination warehouse 71 through the input device 14. If the number of transportation vehicles is limited and the available transportation amount is limited, the user further specifies a total transportation amount. The inventory planning criteria can be configured by user input through a GUI as illustrated in FIG. 10 or by import of an electronic file in a predetermined format.

FIG. 10 is a diagram for providing an example of an inventory planning configuration screen 430. The inventory planning configuration screen 430 is generated by the transportation amount calculation module 26 and displayed on the output device 15. The inventory planning configuration screen 430 displays inventory planning criteria such as a stock holding period, a total transportation amount, and a shipping priority as selections. In the case of selecting the stock holding period, the user clicks the radio button 431 and inputs a number of days 435 and/or an assurance level 436 to the corresponding entry boxes to complete the settings.

In the case of selecting the total transportation amount, the user clicks the radio button 432 and inputs a number of palettes 437 to the entry box to complete the settings. The number of palettes 437 indicates the number of palettes transportable in one transportation, for example. In the case of selecting the shipping priority, the user clicks either the radio button 433 for the descending order or the radio button 434 for the ascending order.

The transportation amount calculation module 26 receives the criteria configured desirably by the user through the inventory planning configuration screen 430 as inventory planning criteria.

At Step 11002, the transportation amount calculation module 26 configures the stock holding period in the destination warehouse desired in the inventory planning and the assurance level of the stock holding period from the received inventory planning criteria. The assurance level is explained. Since the inventory planning is based on forecasts, it is necessary to take account of the possibility that the forecasts are wrong.

Accordingly, if an extra amount is added to the forecasted shipping amount in transporting an article, the probability to secure the stock holding period increases. For example, assuming that the forecasting error follows normal distribution, if the amount calculated by adding the standard deviation of the forecasting error to the forecasted shipping amount for the day is transported, the probability that the destination warehouse will successfully keep stock of the article during the day becomes approximately 84%. In Embodiment 1, the forecasted shipping amount to be input to the transportation amount calculation module 26 is of the recommended forecasting model 27 but it is not limited to this. For another example, the user may choose either the forecast of the recommended forecasting model 27 or the forecast of the user forecasting model 28 to input to the transportation amount calculation module 26.

If the user specifies the stock holding period together with its assurance level at Step 11001, the transportation amount calculation module 26 employs the inventory planning criteria without change at Step 11002.

If the user does not specify the assurance level, the transportation amount calculation module 26 may use a predetermined value. If the user specifies a total transportation amount 437 at Step 11001, the transportation amount calculation module 26 uses predetermined stock holding period and assurance level as initial values.

At Step 11003, the transportation amount calculation module 26 selects one article from the articles to be transported. The articles to be transported are included in the articles handled by the sender warehouse 71. The articles to be transported can be determined based on the quantity 335 in the inventory data 33 and the stock holding period. For example, an article about which the location 334 indicates "M" and the quantity 335 will not satisfy the predetermined stock holding period is determined to be transported.

At Step 11004, the transportation amount calculation module 26 calculates the stock amount that satisfies the stock holding period in the destination warehouse and the assurance level of the forecast determined at Step 11002 for the article selected at Step 11003.

For example, assuming that the forecasting error follows normal distribution, the transportation amount calculation module 26 can calculate the amount required to keep stock of the article for N days by ∑µ + N^0.5*k*σ, where ∑µ represents the sum of the forecasted daily shipping amounts for N days, k represents the coefficient determined depending on the assurance level, and o represents the standard deviation of forecasting error. Assigning 1 to k, for example, the stock can be secured at a probability of 84%.

If the destination warehouse 71 has the article in stock, the transportation amount calculation module 26 calculates the necessary transportation amount by reducing the quantity 335 of the stock from the amount obtained at Step 11004.

The transportation amount calculation module 26 further determines the warehouse 71 to pick up the article in view of the priority level of each stock. The transportation priority is determined using the already calculated shipping priority.

For example, in the case where the warehouse 71-2 or 71-3 having no shipping functions is to be a sender to transport an article to be shipped in the near future, the transportation amount calculation module 26 assigns transportation priorities to the stocks in descending order of the shipping priority. In the case where the warehouse 71-1 having shipping functions is to be a sender to transport an article that will not be shipped for a while, the transportation amount calculation module 26 assigns transportation priorities to the stocks in ascending order of the shipping priority. The transportation amount calculation module 26 allocates the stocks for the transportation in descending order of the transportation priority until the total amount of the allocated stocks reaches the amount to be transported.

At Step 11005, the transportation amount calculation module 26 determines whether the foregoing processing from Step 11003 to Step 11004 has been performed on all articles stored in the sender warehouse 71. If the processing has been performed on all articles, the transportation amount calculation module 26 proceeds to Step 11006 and if some article remains, returns to Step 11003 to repeat the above-described processing.

At Step 11006, the transportation amount calculation module 26 determines whether a predetermined condition is satisfied as a result of calculation of the required transportation amounts of all articles. If the stock holding period is specified in the inventory planning configuration screen 430, this step is can be skipped. If the total transportation amount is specified, the following processing is performed.

If the total of the required transportation amounts calculated by the transportation amount calculation module 26 is more than the total transportation amount specified in the inventory planning configuration screen 430 (in other words, the transportation vehicle becomes overloaded), the transportation amount calculation module 26 returns to Step 11002, lowers the value of the assurance level or the stock holding period, and re-executes the processing from Step 11003 to Step 11005.

If the total of the calculated required transportation amounts is less than the total transportation amount specified in the inventory planning configuration screen 430 and the difference is larger than a specific amount (in other words, the transportation vehicle has extra room), the transportation amount calculation module 26 returns to Step 11002, raises the value of the assurance level or the stock holding period, and re-executes the processing from Step 11003 to Step 11005.

The transportation amount calculation module 26 exits calculation of the transportation amount when the condition of Step 11006 is satisfied.

Returning to FIG. 6, Step 6007 is performed by the inventory plan visualization module 24. The inventory plan visualization module 24 generates a screen showing a proposed inventory plan for the administrator of a warehouse 71 to decide whether to approve the inventory plan.

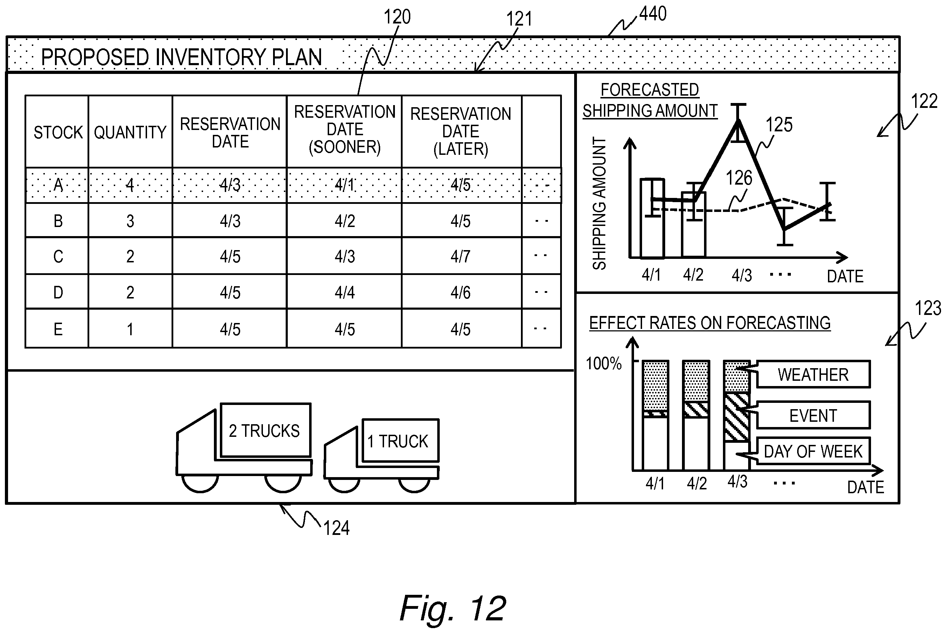

FIG. 12 is a diagram for providing an example of the screen to output a proposed inventory plan 440. The proposed inventory plan 440 includes an area 121 to display an inventory plan 120 of each article assigned a transportation amount, an area 122 to display the forecasted shipping amounts, an area 123 to display the effect rates on forecasting, and an area 124 to display the vehicles required to transport the articles.

If the area 121 is not large enough to display the entire inventory plan 120, the screen 440 may be configured to output another screen to display the details of the inventory plan 120 shown in FIG. 13 in response to a specific operation such as a double click on the area 121.

In FIG. 13, the inventory plan 120 includes a stock 1201 for storing the identifier of a stock, an article 1202 for storing the identifier or the name of an article, a current location 1203 for storing the location where the stock is currently stored, a destination 1204 for storing the location where to transport the stock (if a specific area has not been determined yet, the name of the destination warehouse is acceptable), a transportation amount 1205 for storing the number of palettes (PL), a reservation date 1206, a reservation date (sooner) 1207, a reservation date (later) 1208, an assurance level 1209, and a stock holding period 1210 in one entry.

In addition to these, the inventory plan 120 may include detailed information on the stock included in the inventory data 33, such as the quantity in stock and the size. The rows of the inventory plan 120 can be sorted desirably. For example, to see the stocks to be shipped in the near future, the user may select the reservation date 1206 or reservation date (sooner) 1207 as a sorting column to display the inventory plan 120 in ascending order. Conversely, to see the stocks not to be shipped for a while, the user may display the inventory plan 120 in descending order. The user can also display the inventory plan 120 in descending order of the transportation amount 1205.

The area 122 shows the forecasted shipping amounts of an article in a line graph 125. The article to be displayed in the area 122 is an article of the stock selected by moving the cursor and clicking on the GUI of the proposed inventory plan 440.

Forecasted shipping amounts are indicated by a line graph 125, for example. In the example shown in FIG. 12, the solid line 125 represents the shipping amounts forecasted by the recommended forecasting model 27 and the broken line 126 represents the shipping amounts forecasted by the user forecasting model 28. The forecasted shipping amounts can be expressed by not only a line graph but also a bar graph. Further, the shipping amounts forecasted by the user forecasting model 28 can be hidden in view of the following cases. For example, the user has not specified anything to generate a user forecasting model 28 and the generated user forecasting model 28 is a simple average of a certain period in the past, which need not be displayed. For another example, the objects to be displayed in the graphics area are too dense to be distinguished. The forecasted shipping amounts can also be indicated with error bars representing error ranges. As to a past period having actual records, the shipping records (the bar graph in FIG. 12) can also be displayed.

The area 123 shows visualized reasons for the forecast of each day (effect rates of variation factors on forecasting). The example in FIG. 12 provides 100% stacked bar charts representing the effect rates on forecasting by showing the percentages of the absolute values of the variation factor-specific shipping amount differences calculated by Step 6004 in different display patterns.

In the example in FIG. 12, the weather, the event, and the day of the week are selected as examples of the variation factors of a forecasted shipping amount and the percentages of the absolute values of the variation factor-specific shipping amount differences are indicated as effect rates on forecasting. An effect rate on forecasting is the degree to which a variation factor affects a forecasted shipping amount (a shipping amount forecasted by the user forecasting model 28 and a shipping amount forecasted by the recommended forecasting model 27).

In the area 122, the forecasted shipping amount of April 3 shows an abrupt increase, compared to those of a few days before and after April 3. Further, the 100% stacked bar chart of the day in the area 123 indicates that the component of "event" accounts for a large rate. These indicate that an unusual shipment occurs on April 3 because of the "event".

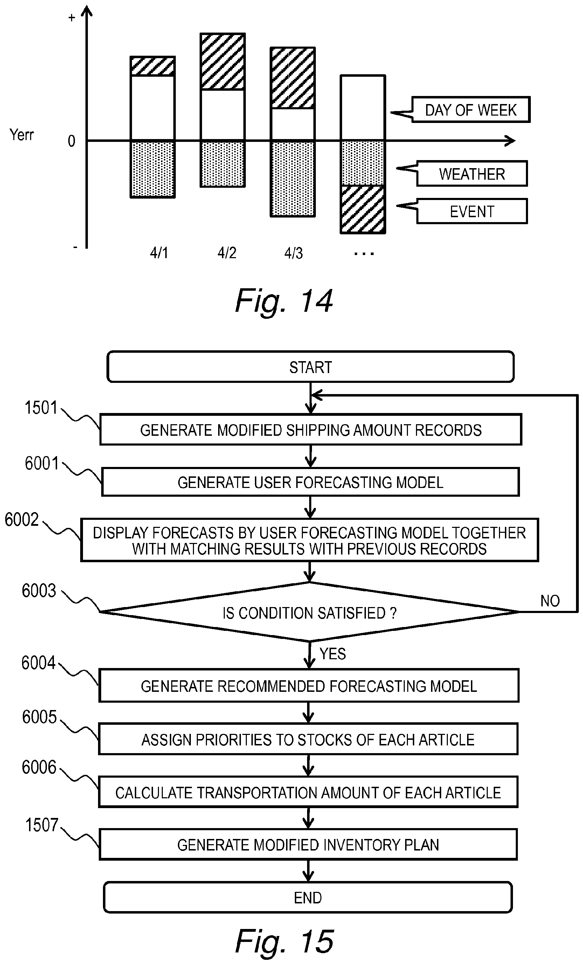

The area 123 enables the user to easily know which variation factor affects a variation in forecasted shipping amount. How to output the variation factors and their effect rates on forecasting is not limited to the example in FIG. 12. For example, whether each variation factor contributes to a positive variation or a negative variation in the forecasted shipping amount can be displayed as shown in FIG. 14.

In the case of the area 123 in FIG. 12, the absolute value of each variation factor-specific shipping amount difference divided by the total amount of the absolute values of all variation factor-specific shipping amount differences is expressed as a percentage of the effect on forecasting. Accordingly, the user cannot know the difference calculated in terms of actual shipping amount. Further, a variation factor-specific shipping amount difference can take either a positive value or a negative value but the example in FIG. 12 does not indicate it. Hence, the example in FIG. 14 employs an expression of stacking a positive value of a variation factor-specific shipping amount difference upward and a negative value downward.

The area 124 provides an example where the number of tracks required for transportation and their sizes (for example, 5-ton track) by graphics or texts.

As set forth above, the inventory management apparatus 1 according to Embodiment 1 generates a user forecasting model 28 based on the variation factors selected by the user and the shipping record data 32, generates a forecasting error model from the user forecasting model 28, the possible variation factor data 31, and the shipping record data 32, and generates a recommended forecasting model 27 from the user forecasting model 28 and the forecasting error model.

The inventory management apparatus 1 calculates variation factor-specific shipping amount differences by resolving the differences between the shipping amount forecasted by the user forecasting model 28 and the shipping amount forecasted by the recommended forecasting model 27 into variation factors and displays the degrees of contribution of the variation factors to the forecasted shipping amount on a daily basis (in time series) on the output screen 440 of a proposed inventory plan as effect rates on forecasting.

Furthermore, the inventory management apparatus 1 receives criteria for inventory planning from the user, calculates the amounts of articles to be transported so that each warehouse 71 will have the optimum amounts of stocks satisfying the inventory planning criteria, and outputs them as an inventory plan 120.

As a result, the inventory management apparatus 1 achieves presenting a forecast considering variation factors understandable or persuasive for the user (administrator) of a warehouse 71 and generating an inventory plan based on the forecast.

### EMBODIMENT 2

FIGS. 15 to 17 illustrate Embodiment 2 of this invention. Embodiment 2 provides an embodiment considering a case such that the forecasting model generated using the possible variation factor data 31 cannot explain the record of a shipping date when an unusual shipment is needed because of an event on which the records and schedules are not included in data.

When the shipping destination is a store that is going to have a sale, the sales information on the sale may not be available as data. Accordingly, the sale is a variation factor not included in the possible variation factor data 31. To address such a case, preparatory processing is performed to adjust the records of unusual shipments in the shipping record data 32 that are likely caused by an event.

The inventory management system in Embodiment 2 is the same as the one in the foregoing Embodiment 1. In Embodiment 2, the inventory management apparatus 1 executes the flowchart of FIG. 15 in place of the flowchart of FIG. 6. Compared to Embodiment 1, FIG. 15 includes an additional Step 1501. The subsequent processing is the same as the processing in Embodiment 1, except for Step 1507.

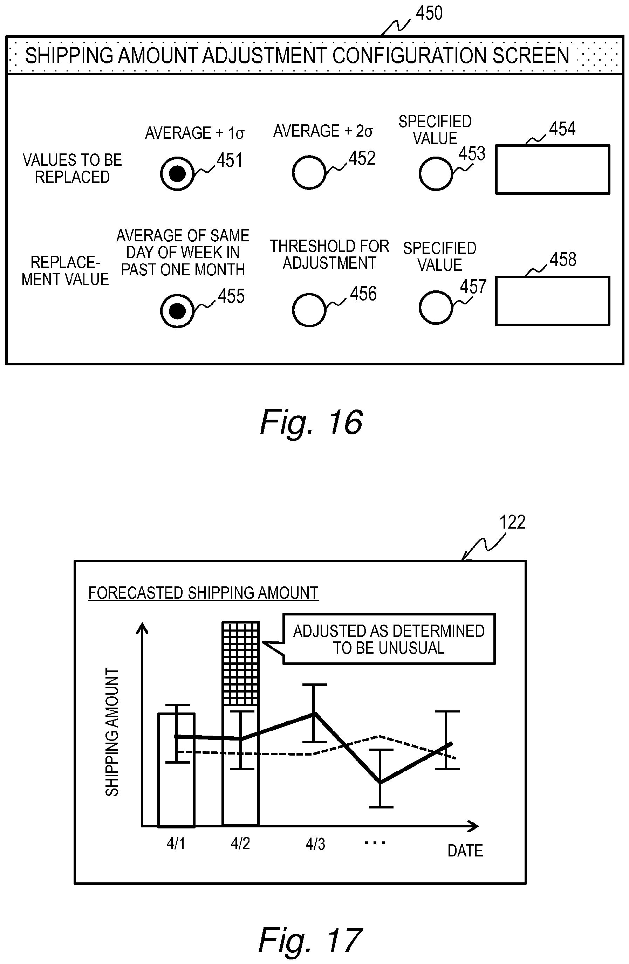

At Step 1501, the user forecasting model generator 21 selects the shipping records showing the shipping amounts higher than the reference threshold (for example, N times of the standard deviation) determined from an average shipping amount in a certain period in the past as the values to be adjusted and changes the values by replacing them with the threshold value or the average value of the same day of the week in the certain period in the past. This configuration can be preset to the inventory management apparatus 1 or specified by the user through a GUI as illustrated in FIG. 16.

FIG. 16 is a diagram for providing an example of a shipping amount adjustment configuration screen 450. The shipping amount adjustment configuration screen 450 includes radio buttons 451 to 453 for selecting "average + 1σ", "average + 2o", or "specified value" as the values to be replaced, an entry box 454 for specifying the value, radio buttons 455 to 457 for selecting "average of the same day of the week in the past one month", "threshold for adjustment", or "specified value" as the replacement value, and an entry box 458 for specifying the value. The user can select the values to be replaced and the replacement value through the shipping amount adjustment configuration screen 450.

Steps 6001 to 6006 are the same as those in FIG. 6 in the above-described Embodiment 1.

At Step 1507, the inventory management apparatus 1 generates a modified inventory plan using information to be visualized, which is partially different from the one in Embodiment 1. If adjustment of shipping amounts is done at Step 1501, the forecasting ignores an unusual shipment that is unable to be explained with the possible variation factor data 31; it is necessary to inform the user who consults the inventory plan, such as the administrator of a warehouse 71, of the operation.

Accordingly, the area corresponding to the area 122 in FIG. 12 in Embodiment 1 can be displayed as shown in FIG. 17. The area 122 in FIG. 17 is configured to show the adjusted (ignored) shipping amount in a different color or pattern to enable the user to visually distinguish it.

As set forth above, Embodiment 2 achieves calculation of a forecast excluding an abrupt variation caused by an unusual event from the shipping record data 32 to generate an inventory plan based on the forecast excluding an unusual event.

### EMBODIMENT 3

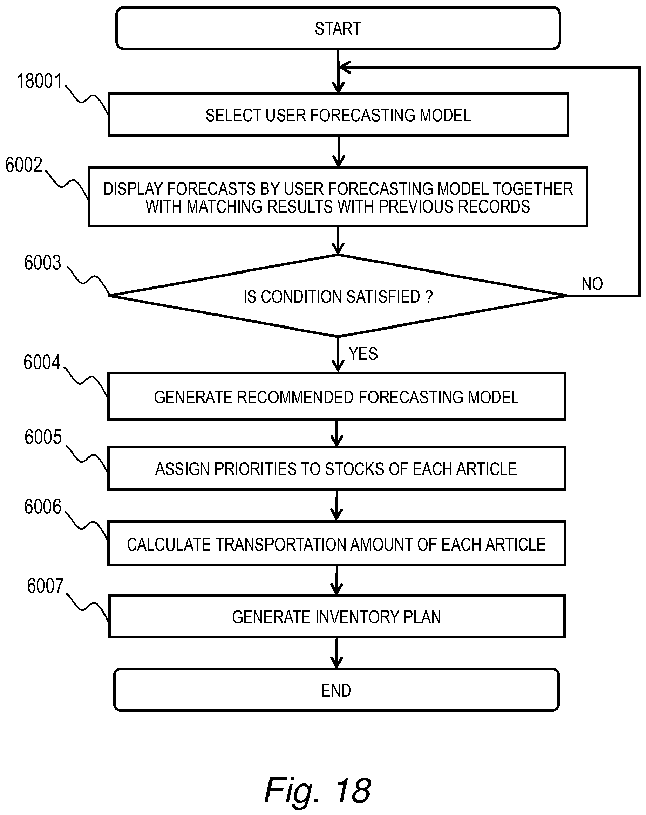

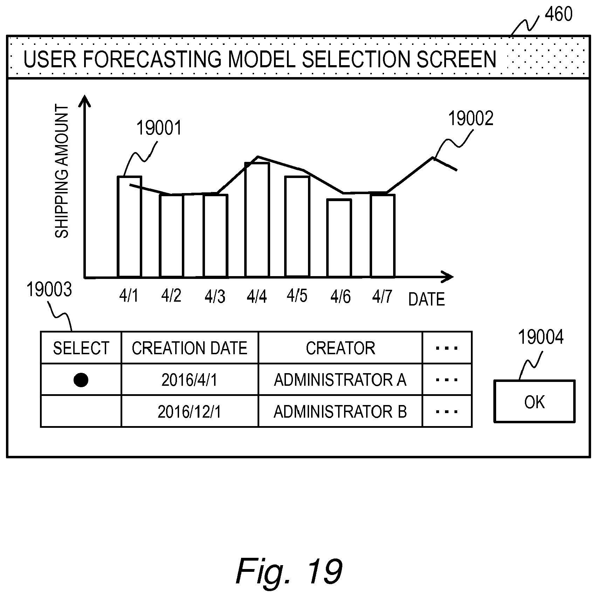

FIGS. 18 and 19 illustrate Embodiment 3 of this invention. Embodiment 3 is an embodiment that accumulates and utilizes the know-how to generate a user forecasting model 28. For example, to utilize the inventory management system employing this technique on a daily basis, the same user forecasting model 28 is likely to be used on each day. Assuming such a case, an example of accumulating and utilizing the data of the user forecasting model 28 is described.

The configuration of the inventory management system in Embodiment 3 is the same as that of the inventory management system in Embodiment 1. In place of the flowchart of FIG. 6, the flowchart of FIG. 18 is executed in Embodiment 3. In FIG. 18, Step 18001 is executed in place of Step 6001 in FIG. 6 of Embodiment 1. The subsequent processing is the same as the processing in Embodiment 1.

The flowchart of FIG. 18 of Embodiment 3 is premised on execution of the processing of Embodiment 1 or Embodiment 2 beforehand.

At Step 18001, the user forecasting model generator 21 selects a user forecasting model 28 to be reused.

The user forecasting model generator 21 may automatically select a user forecasting model 28 (for example, the user forecasting model used lately) or the user may select a desired user forecasting model 28.

For example, the user may select a user forecasting model 28 through a user forecasting model selection screen as illustrated in FIG. 19. FIG. 19 is a diagram for providing an example of the user forecasting model selection screen 460. The user selects a previously generated user forecasting model from the table 19003 to display its forecasts in a chart in the upper area. The bar graph 19001 represents the past records and the line graph 19002 represents the selected user forecasting model. After reviewing the displayed information and deciding the user forecasting model to use, the user clicks the button 19004.

With this operation, a recommended forecasting model 27 and an inventory plan are generated using the selected user forecasting model 28, like in Embodiment 1. Embodiment 3 enables efficient generation of an inventory plan 120 using a previously generated user forecasting model 28.

### <Conclusions>

This invention is not limited to the embodiments described above, and encompasses various modification examples. For instance, the embodiments are described in detail for easier understanding of this invention, and this invention is not limited to modes that have all of the described components. Some components of one embodiment can be replaced with components of another embodiment, and components of one embodiment may be added to components of another embodiment. In each embodiment, other components may be added to, deleted from, or replace some components of the embodiment, and the addition, deletion, and the replacement may be applied alone or in combination.

Some of all of the components, functions, processing modules, and processing means described above may be implemented by hardware by, for example, designing the components, the functions, and the like as an integrated circuit. The components, functions, and the like described above may also be implemented by software by a processor interpreting and executing programs that implement their respective functions. Programs, tables, files, and other types of information for implementing the functions can be put in a memory, in a storage apparatus such as a hard disk, or a solid state drive (SSD), or on a recording medium such as an IC card, an SD card, or a DVD.

The control lines and information lines described are lines that are deemed necessary for the description of this invention, and not all of control lines and information lines of a product are mentioned. In actuality, it can be considered that almost all components are coupled to one another.

## Claims

1. An inventory management apparatus configured to manage an inventory of articles stored in a warehouse, the inventory management apparatus comprising:
a processor;
a memory;
shipping record data storing records of shipping amounts of the articles shipped from the warehouse;
possible variation factor data in which variation factors supposed to affect the shipping amounts are specified in advance;
a user forecasting model generator configured to receive variation factors selected by a user and generate a user forecasting model from the received variation factors and the shipping record data; and
a recommended forecasting model generator configured to select variation factors from the possible variation factor data and generate a recommended forecasting model from the user forecasting model and the shipping record data,
wherein the recommended forecasting model generator is configured to:
calculate a forecasted shipping amount of an article as a first forecasted shipping amount using the user forecasting model;
calculate a forecasted shipping amount of the article as a second forecasted shipping amount using the recommended forecasting model; and
calculate a degree of effect of each variation factor on the first forecasted shipping amount and the second forecasted shipping amount from values obtained by resolving a difference between the first forecasted shipping amount and the second forecasted shipping amount into the variation factors.

2. The inventory management apparatus according to claim 1, further comprising a visualization module configured to generate a screen showing the first forecasted shipping amount, the second forecasted shipping amount, and the degree of effect of each variation factor.

3. The inventory management apparatus according to claim 1, wherein the recommended forecasting model generator is configured to:
generate a forecasting model with an additional explanatory variable by adding an explanatory variable depending on one of the selected variation factors to the user forecasting model;
calculate a forecasting error of the user forecasting model;
generate a forecasting error model from the forecasting model with an additional explanatory variable and the forecasting error; and
generate the recommended forecasting model by adding the forecasting error model to the user forecasting model.

4. The inventory management apparatus according to claim 3, wherein the recommended forecasting model generator is configured to select variation factors that are not selected to generate the user forecasting model.

5. The inventory management apparatus according to claim 1, further comprising a transportation amount calculation module configured to:
receive either the first forecasted shipping amount or the second forecasted shipping amount and user's criteria for inventory planning;
calculate a transportation amount of the article to be transported from a warehouse to another in accordance with the user's criteria for inventory planning; and
output the calculated transportation amount as an inventory plan.

6. The inventory management apparatus according to claim 5, wherein the transportation amount calculation module is configured to:
receive a stock holding period in the warehouse of the destination of the transportation and an assurance level; and
calculate the transportation amount from a warehouse to another satisfying the stock holding period and the assurance level.

7. An inventory management method for managing an inventory of articles stored in a warehouse using a computer including a processor and a memory, the inventory management method comprising:
a first step of retrieving, by the computer, shipping record data storing records of shipping amounts of the articles shipped from the warehouse and possible variation factor data in which variation factors supposed to affect the shipping amounts are specified in advance;
a second step of receiving, by the computer, variation factors selected by a user and generating a user forecasting model from the received variation factors and the shipping record data; and
a third step of selecting, by the computer, variation factors from the possible variation factor data and generating a recommended forecasting model from the user forecasting model and the shipping record data,
wherein the third step includes:
calculating a forecasted shipping amount of an article as a first forecasted shipping amount using the user forecasting model;
calculating a forecasted shipping amount of the article as a second forecasted shipping amount using the recommended forecasting model; and
calculating a degree of effect of each variation factor on the first forecasted shipping amount and the second forecasted shipping amount from values obtained by resolving a difference between the first forecasted shipping amount and the second forecasted shipping amount into the variation factors.

8. The inventory management method according to claim 7, further comprising a fourth step of generating, by the computer, a screen showing the first forecasted shipping amount, the second forecasted shipping amount, and the degree of effect of each variation factor.

9. The inventory management method according to claim 7, wherein the third step includes:
generating a forecasting model with an additional explanatory variable by adding an explanatory variable depending on one of the selected variation factors to the user forecasting model;
calculating a forecasting error of the user forecasting model;
generating a forecasting error model from the forecasting model with an additional explanatory variable and the forecasting error; and
generating the recommended forecasting model by adding the user forecasting model to the forecasting error model.

10. The inventory management method according to claim 9, wherein the third step includes selecting variation factors that are not selected to generate the user forecasting model.

11. The inventory management method according to claim 7, further comprising a fifth step including:
receiving, by the computer, either the first forecasted shipping amount or the second forecasted shipping amount and user's criteria for inventory planning;
calculating, by the computer, a transportation amount of the article to be transported from a warehouse to another in accordance with the user's criteria for inventory planning; and
outputting, by the computer, the calculated transportation amount as an inventory plan.

12. The inventory management method according to claim 11, wherein the fifth step includes:
receiving, by the computer, a stock holding period in the warehouse of the destination of the transportation and an assurance level; and
calculating, by the computer, the transportation amount from a warehouse to another satisfying the stock holding period and the assurance level.

13. A non-transitory storage medium readable by a computer including a processor and a memory, the non-transitory storage medium storing a program configured to make the computer manage an inventory of articles stored in a warehouse by executing:
a first step of retrieving shipping record data storing records of shipping amounts of the articles shipped from the warehouse and possible variation factor data in which variation factors supposed to affect the shipping amounts are specified;
a second step of receiving variation factors selected by a user and generating a user forecasting model from the received variation factors and the shipping record data; and
a third step of selecting variation factors from the possible variation factor data and generating a recommended forecasting model from the user forecasting model and the shipping record data,
wherein the third step includes:
calculating a forecasted shipping amount of the articles as a first forecasted shipping amount using the user forecasting model;
calculating a forecasted shipping amount of the articles as a second forecasted shipping amount using the recommended forecasting model; and
calculating a degree of effect of each variation factor on the first forecasted shipping amount and the second forecasted shipping amount from values obtained by resolving a difference between the first forecasted shipping amount and the second forecasted shipping amount into the variation factors.

14. The non-transitory storage medium according to claim 13, wherein the program is configured to make the computer further execute a fourth step of generating a screen showing the first forecasted shipping amount, the second forecasted shipping amount, and the degree of effect of each variation factor.

15. The non-transitory storage medium according to claim 14, wherein the third step includes:
generating a forecasting model with an additional explanatory variable by adding an explanatory variable depending on one of the selected variation factors to the user forecasting model;
calculating a forecasting error of the user forecasting model;
generating a forecasting error model from the forecasting model with an additional explanatory variable and the forecasting error; and
generating the recommended forecasting model by adding the user forecasting model to the forecasting error model.
